# NEUE EUROPÄISCHE PATENTSCHRIFT

(11) **EP 1 232 780 B2**
(45) Veröffentlichungstag und Bekanntmachung des Hinweises auf die Entscheidung über den Einspruch: **29.10.2014**
(45) Hinweis auf die Patenterteilung: 17.09.2003
(21) Anmeldenummer: 01104051.6
(22) Anmeldetag: 20.02.2001
(51) Int. Cl.: B01D 39/08, B01D 39/16

(54) **Filtertuch**
Filtercloth
Tissu filtrant

(43) Veröffentlichungstag der Anmeldung: 21.08.2002
(73) Patentinhaber: Sefar AG, 8803 Rüschlikon (CH)
(72) Erfinder: Müller, Hans Rudolf, 8038 Zürich (CH); Maurer, Christoph, 8001 Zürich (CH)
(74) Vertreter: Wunderlich, Rainer

(56) Entgegenhaltungen:
- EP-A- 0 390 005
- EP-A1- 0 934 769
- EP-A2- 0 379 967
- DE-A1- 4 206 997
- GB-A- 2 146 545
- US-A- 4 578 192
- US-A- 6 030 905
- US-A- 6 030 905
- Produktbroschüren, Elasta Filtertuch, Datenblätter und Rechnungen in Englisch und Finnisch, teils undatiert (Annex 2 der Einsprechenden I)
- PI98024400 Brasilianisches Patent mit englischer Übersetzung
- 'Tamfelt seeks increased exports for ELASTA filter bags and cloths' ENGINEERING AND MINING JOURNAL September 1982, Seite 204
- New Oxford Dictionary of English, S. 594
- P. OLIN: 'Fouling of Different Cloths in Filtration in Ore Concentrate' MASTER OF SCIENCE THESIS 1994, Seiten 12-15,39 - 40
- P. STRIEGL: 'Self cleaning filters and conveyor belts from elastic monofilaments' ASIEN TEXTILE JOURNAL Juni 1998, Seiten 69 - 70
- D. PURCHAS: 'Handbook of Filter Media', 1996, ELSEVIER Seiten 41 - 65-93
- C. DICKENSON: 'Filters and Filtration Handbook', Bd. 3, 1994, ELSEVIER
- Produktbroschüre Scandiafelt AB, Belt Filter Presses, undatiert
- Produktborschüre Scandiafelt AB, Horizontal Belt Filters, undatiert
- C. DICKENSON: 'Filters and Filtration Handbook', Bd. 4, 1997, ELSEVIER Seiten 88 - 89
- Juutilainen, H.:"Tamfeld filter cloths in the mining industry", ASIAMINING March1980

## Beschreibung

Die Erfindung betrifft einen Filterbeutel für ein Scheibenfilter nach Patentanspruch 1.

Filterbeutel für ein Scheibenfilter sind etwa aus dem Artikel "Tamfelt seeks increased exports for ELASTA filter bags and cloths", Engineering an Mining Journal, September 1982, Seite 204 bekannt.

Aus dem Artikel von Striegel P.: "Self cleaning filters and conveyor belts from elastic monofilaments", in Asian Textile Journal, Juni 1998, Seiten 69 und 70 gehen ein Förderband und ein Filtermaterial mit einem elastischen Monofilament hervor. Das Förderband weist zur Erhöhung der CMD-Stabilität ein PETP-Monofilamentgarn in Schussrichtung auf. Das Filtermaterial weist in Kett- und in Schussrichtung das Monofilamentgarn Elas-Ter auf.

Im "Handbook of Filter Media", D. Purchas, Elsevier, 1996, Seiten 70 ff. wird gelehrt, dass Gewebe allgemein mit einer Beschichtung versehen werden können.

Im "Handbook of Technical Textiles", The Textile Institute, Woodhead Publ., 2000, Seiten 333 bis 348 wird die Zugabe von antistatischen Additiven und Gleitmitteln gelehrt, um die Verarbeitung eines Monofils im Webprozess zu erleichtern.

Ein Filtermaterial mit einem hochelastischen Monofilgarn ist aus der US-A-6,030,905 bekannt. Hierin werden verschiedene hochelastische Monofilgarne mit einer Elastizität von 60% und mehr beschrieben. Das konkret beschriebene hochelastische synthetische Monofilgarn besteht aus zumindest 70 % eines thermoplastischen elastomeren Copolyetherester. Dieses thermoplastische elastomere Copolyetherester enthält mindestens 95 % eines ganz speziellen Polymeres, dessen Struktur in der genannten Druckschrift näher beschrieben ist. Dieses hochelastische Monofilgarn soll eine Dehnbarkeit von bis zu 110 % aufweisen. Ein derart aufgebautes Filtermaterial soll eine verbesserte Formbeständigkeit aufweisen, was insbesondere beim Einsatz in einer Filterpresse vorteilhaft ist.

Aus der EP-A-0 390 005 geht ein mehrlagiges Papiermaschensieb hervor. Bei diesem Papiermaschensieb sind Längs- und Querfäden in einer 16-schäftigen Bindung miteinander verwebt, wobei an der Siebunterseite lange Fadenflottierungen von Querfäden vorliegen. Die flottierenden Querfäden sind jeweils von zwei Längsfäden an der Siebunterseite überkreuzt, die von zumindest zwei nebeneinander liegenden Längsfäden außerhalb des Bereichs der Siebunterseite separiert sind. Hierdurch sollen sich lange Fadenflottierungen mit großer Stabilität in Verbindung mit einer weitgehenden Markierungsfreiheit an der Blattbildungsseite des Siebes erzielen lassen. Zur Anpassung der blattbildenden Sieboberseite an die jeweiligen Betriebsverhältnisse wird vogeschlagen, benachbarte Querfäden hinsichtlich des Elastizitätsmodules unterschiedlich zu wählen. Als Fäden werden auch monofile Kunststoffdrähte erwähnt.

Ein Filtertuch mit einem Befestigungsbereich zum Anbringen an das Filter und einem Filtrationsbereich zur Auflage auf einer Stützfläche des Filters wird beispielsweise bei Vakuum- und Druckscheibenfiltern eingesetzt, die zur Flüssig-Feststoff-Trennung vorwiegend in Erz- und Mineralminen, beispielsweise für Aufbereitungsprozesse, verwendet werden.

Bei einem Scheibenfilter sind auf einer rohrförmigen Achse mehrere Scheiben angeordnet, die jeweils in mehrere Segmente mit Hohlräumen unterteilt sind. Diese Segmente sind mit im Wesentlichen trapezförmigen Beuteln aus Filtergewebe überzogen, durch welches die Flüssig-Feststofftrennung erfolgt. Während des Betriebs sind die Filterscheiben bis zu etwa einem Drittel ihres Durchmessers in eine zu filtrierende Suspension eingetaucht, welche beispielsweise in einem Tank, einer Wanne oder einem Trog aufgenommen sein kann. Die Filterscheiben können schrittweise oder kontiuierlich mit Hilfe der rohrförmigen, hohlen Achse gedreht werden. Die Hohlräume der einzelnen Scheibensegmente einer Filterscheibe sind miteinander verbunden und werden im Betrieb unter Vakuum gesetzt. Das Vakuum bewirkt den Durchtritt der Suspensionsflüssigkeit vom Tank in die Hohlräume, wobei ein zu filtrierender Feststoffanteil der Suspension von dem Filtergewebe zurückgehalten wird und einen sogenannten Filterkuchen bildet. Der durch das Filtergewebe hindurchgetretene Flüssiganteil der Suspension wird von einer Pumpe aus dem Filter befördert.

In einem Dauerbetrieb muss der Filterkuchen schrittweise oder kontinuierlich von dem Filtergewebe gelöst werden, da sonst die Feststoffmasse wieder in das Suspensionsreservoir zurückgeführt würde. Es ist bekannt, diese Ablösung des Filterkuchens mit Hilfe eines an der Außenseite der Filtertücher angeordneten Abstreifers zu bewirken. Damit einher geht allerdings zumeist eine sehr starke mechanische Beanspruchung des Filtertuchs. Beispielsweise können durch den mechanischen Kontakt eines Abstreifers mit dem Filtergewebe Aufrauungen entstehen, welche eine Verstopfung des Filtergewebes durch Einlagerung kleinster Partikel begünstigen und somit zu einem fortschreitenden Leistungsverlust des Filtertuchs führen.

Es ist weiterhin bekannt, zum Schutz des Filtertuchs vor mechanischer Beanspruchung beim Abstreifprozess das Filtertuch in einer oder mehreren Richtungen mit besonders stabilen Fäden, beispielsweise auch Metalldrähten, zu versehen. Hierdurch steigt jedoch in erheblichem Maß der Aufwand für die Herstellung solcher Filtertücher und damit auch deren Kosten.

Eine weitere bekannte, prinzipiell unterschiedliche Methode zur Ablösung des Filterkuchens von dem Filtertuch bei einem Scheibenfilter besteht darin, das Vakuum in einem Filterscheibensegment bei einer bestimmten Winkelposition zu unterbrechen und den Filterkuchen mit Hilfe eines Luftstoßes von dem Filtertuch abzublasen. Das abgeblasene Feststoffmaterial kann dann durch einen Trichter aufgefangen und mit geeigneten Einrichtungen aus dem Filter befördert werden.

Wenn beispielsweise eine Filterscheibe im Uhrzeigersinn rotiert, muss der Filterkuchen an einer der Uhrzeit "drei Uhr" entsprechenden Winkelposition von der Scheibe gelöst werden, da sonst die Feststoffmasse wieder in das Suspensionsreservoir zurückgeführt würde. Hierzu wird beispielsweise auf der Winkelposition "drei Uhr" das Vakuum unterbrochen und Luft in das Filterscheibensegment eingeblasen. Der Filterkuchen wird durch den Luftstoß vom Filtertuch abgelöst, mit Hilfe eines Trichters aufgefangen und aus dem Filter herausbefördert.

Für die Herstellung bisheriger bekannter elastischer Filtergewebe oder Elastikgewebe werden texturierte, d.h. gekräuselte Multifilgarne verwendet. Solche Gewebe aus Multifilgarnen weisen allerdings eine Reihe von Nachteilen auf. Aufgrund der sehr großen Oberfläche von gekräuselten Multifilgarnen werden Feinstpartikeleinlagerungen im Gewebegefüge begünstigt, wodurch sich im Betrieb eine graduelle Verstopfung des Filtergewebes und damit ein gradueller Leistungsverlust ergibt.

Weiterhin verschlechtern eingelagerte Partikel auch die Elastizitätseigenschaften des Filtergewebes. Im Übrigen weist ein Filtergewebe aus einer Vielzahl feiner Einzelfasern in texturierten Garnen naturgemäß schlechte Abriebeigenschaften auf, da mechanische Einflüsse sehr schnell zu einer Verletzung der Feinstgarne führen können. Schließlich bewirkt die sehr starke Strukturierung der Gewebeoberflächen durch die texturierten Multifilgarne ein sehr starkes Haften des Filterkuchens an der Gewebeoberfläche.

Aufgabe der Erfindung ist es, einen Filterbeutel anzugeben, bei dem ein Filterkuchen in besonders einfacher und schonender Weise abgenommen oder abgeworfen werden kann und welchen besonders lange Standzeiten aufweisen.

Diese Aufgabe wird durch einen Filterbeutel nach Patentanspruch 1 gelöst.

Bevorzugte Ausgestaltungen des Filtertuchs sind in den Unteransprüchen beansprucht.

Zum Abheben des Filtrationsbereichs von der Stützfläche ist zumindest in dem Filtrationsbereich eine dehnbare Gewebestruktur vorgesehen. Zumindest in dem Filtrationsbereich sind in die Gewebestruktur gezielt hochelastische Monofilgarne zur Erzeugung einer definierten Elastizität eingearbeitet.

Ein Kerngedanke der Erfindung kann darin gesehen werden, dass wenigstens in einem Teilbereich des Filtertuchs hochelastische Monofilgarne verabeitet sind, so dass in diesem Gewebebereich eine bestimmte gewünschte Elastizität und damit ein gewünschtes Verhalten, insbesondere eine starke Dehnung, des Filtertuchs bei Einleitung eines Druckluftstoßes in den bestimmten Hohlraum eines Scheibenfiltersegments gegeben ist.

Da die Monofilgarne sehr glatte Oberflächen aufweisen, ist bei dem Filtertuch die Haftung zum Filterkuchen deutlich reduziert und es ergeben sich insgesamt hervorragende Kuchenabwurfeigenschaften. Weiterhin ist die Einlagerung kleiner Partikel im Gewebefüge aufgrund der sehr glatten Oberfläche der Monofilgarne deutlich reduziert, so dass Monofilgewebe eine spürbar geringere Tendenz zum Verstopfen aufweisen und sich außerdem besser reinigen und/-oder entstopfen lassen. Beispielsweise können beim Zurückblasen zum Kuchenabwurf, d.h. beim Einleiten eines Druckluftstoßes gleichzeitig auch Restbestände von Feinstoffanteilen im Filtergewebe ausgeblasen werden.

Ein weiterer wesentlicher Vorteil des Filtertuchs kann darin gesehen werden, dass monofile Elastikgewebe eine bedeutend geringere Elastizitätsermüdung als multifile Elastikgewebe aufweisen. Das heißt, dass die monofilen Elastikgewebe ihre formrückbildenden Eigenschaften über einen längeren Zeitraum beibehalten und dass Gewebedeformationen aufgrund von permanenten Überdehnungen vermieden werden können. Auf diese Weise kann einer Faltenbildung im Gewebe und damit einem vorzeitigen Gewebebruch vorgebeugt werden.

Schließlich weist das Filtertuch auch im Hinblick auf die Abriebfestigkeit deutliche Verbesserungen im Vergleich zu Geweben aus multifilen elastischen Garnen auf.

Bei einer Ausgestaltung ist die Gewebestruktur in dem Filtrationsbereich aufblähbar ausgebildet. Insbesondere kann dabei eine ballonartige Aufblähbarkeit vorgesehen sein. Das Lösen des Filterkuchens erfolgt dabei nicht nur durch die ausströmende Luft, sondern auch durch die erhebliche Dehnung der Filterkuchenfläche. Die Dehnung kann zwischen 2% und 80% gewählt werden, wobei diese Dehnung größer als die des Filterkuchens ist. Dies unterstützt ein Aufreißen und Lösen des Filterkuchens. Es kann zudem eine weitere Selbstreinigung des Filtertuchs aufgrund eines Balloneffekts erzielt werden, wobei als Ursache für diesen Selbstreinigungseffekt ein Walkvorgang zwischen benachbarten Garnen im Filtertuch, d.h. eine Relativbewegung von benachbarten Garnen, angesehen werden kann. Hierdurch werden insbesondere die Feststoffpartikel gelöst und abgestreift, die sich an den Kreuzungspunkten der Garne ablagern.

Es ist Vorgesehen, dass die Gewebestruktur zumindest ein weiteres Garn mit geringer Elastizität aufweist und dass beim Aufblähen eine definierte Relativbewegung zwischen den Garnen unterschiedlicher Elastizität besteht. Durch den Einsatz von Garnen unterschiedlicher Elastizität ergeben sich erfindungsgemäß vergleichsweise große Relativbewegungen zwischen den Fasern, so dass der Selbstreinigungseffekt des Filtertuches verstärkt wird. Vorzugsweise beträgt das Verhältnis der Elastizität der unterschiedlichen Garne zumindest 2 zu 1 und größer.

Das hochelastische Monofilgarn ist bevorzugt aus Polyester, Polyurethane, Polyolefine, Polyamide und/oder deren Copolymere, insbesondere Copolyether-Ester gefertigt. Es handelt sich dabei insbesondere bei Copolyether-Ester um ein synthetisches Copolymer, welches bezüglich Festigkeit, Bruchdehnung, Knotenfestigkeit und insbesondere bezüglich der Dauerelastizität hervorragende Eigenschaften für den Einsatz bei einem Filtertuch aufweist.

Bei einer weiteren Ausgestaltung weist die Gewebestruktur neben Monofilgarnen auch elastische und/oder reguläre nichtelastische multifile und/oder quasi multifile Garne auf. Die Filtrationseigenschaften des Filtertuchs können dabei durch Wahl der einzelnen Garne gezielt verändert werden. Um gleichwohl ein Gewebe mit guten Abriebeigenschaften zu erhalten, kann es vorteilhaft sein, die Gewebestruktur in diesem Fall so auszubilden, dass zumindest eine Oberfläche des Filtertuchs im Wesentlichen vollständig von Monofilgarnen gebildet wird.

Für Anwendungen, bei denen es tendenziell verstärkt zu Gewebeverstopfungen kommt, beispielsweise bei Suspensionen, welche einen hohen Anteil sehr kleiner Partikel enthalten, ist ein Filtertuch bevorzugt, welches vollständig aus Monofilfasern aufgebaut ist. Die Gewebestruktur kann dabei vollständig aus hochelastischen Monofilfasern aufgebaut sein oder neben den eleastischen Monofilfasern auch in gewissem Maße reguläre, nichtelastische Monofilfasern aufweisen.

Bei einer besonders einfachen Ausgestaltung der Erfindung bestehen die Kettfäden der Gewebestruktur aus hochelastischem Monofilgarn und die Schussfäden aus einem regulären nichtelastischen Garn. Ein solches Filtertuch weist eine stark richtungsabhängige Elastizität auf, was beispielsweise in einer Verwendung als Filterband von Vorteil ist.

Die Gewebe werden vorzugsweise in Körper- und/oder Atlasbindungen hergestellt, wobei hochelastische Monofilgarne in Kett- und/oder Schussrichtung eingesetzt werden können.

Für den Fall, dass besondere mechanische Eigenschaften des Filtertuchs und/oder besondere Filtrationseigenschaften gefordert sind, sind auch doppel- und mehrlagige Gewebe in verschiedenen Gewebebindungen machbar. Mit Kombinationen von elastischen und regulären Monofilgarnen in allen Geweberichtungen und/oder abwechslungsweise in einer bestimmten Richtung können beliebige gewünschte Elastizitätsprofile erzeugt werden.

Erheblich verbesserte Abwurfeigenschaften des Filtertuchs für den Filterkuchen können schließlich dadurch erzielt werden, dass eine Oberfläche des Filtertuchs, insbesondere die Oberfläche einer einem Filterkuchen zugewandten Seite, zur Vergütung der Oberfläche kalandriert und/oder mit einer Beschichtung versehen ist. Die Monofilgarne sind mit einer Antihaft-Beschichtung versehen.

Die oben gestellte Aufgabe wird bezüglich des Filterbeutels durch einen Filterbeutel für Scheibenfilter gelöst, welcher aus einem solchen Filtertuch gefertigt ist.

Bezüglich des erfindungsgemäßen Filterbeutels ist insbesondere der Vorteil des Ballon- und des damit zusammenhängenden Walkeffekts bedeutsam, wobei diese Effekte durch den erfindungsgemäßen Einsatz hochelastischer Monofilgarne deutlich verstärkt werden. Es lassen sich mit diesen hochelastischen Monofilgarnen bei geringem Kraftaufwand bereits sehr hohe Dehnungen erzielen, so dass beispielsweise mit geringen Druckluftstößen hohe Flächendehnungen erreicht werden können. Beispielsweise sind bei dem erfindungsgemäßen Filterbeutel Flächendehnungen von ΔA/A ≥ 0,02 möglich. Der Beutel ist scheibensegmentförmig konfektioniert. Die schmale Öffnung am Fuß des Beutels kann aufgrund des elastischen Materials bei weiter guter Anlage an die Stützfläche auf das Segmentgerüst aufgezogen werden.

Die Erfindung ist bevorzugt auf Filtern der kuchenbildenden Filtration anwendbar, bei denen eine Einrichtung zum Abblasen des Filterkuchens von der Rückseite des Filtrationsbereiches vorgesehen ist.

## Patentansprüche

1. Filterbeutel für Scheibenfilter, wobei der Filterbeutel scheibensegmentförmig konfektioniert ist, eine schmale Öffnung aufweist und aus einem Filtertuch für eine kuchenbildende Filtration mit einem Filtrationsbereich gefertigt ist, der eine dehnbare Gewebestruktur aus einem hochelastischen Monofilgarn, welches eine bestimmte Elastizität besitzt, und zumindest einem weiteren Garn aufweist,
wobei das weitere Garn eine Elastizität besitzt, die geringer als die des hochelastischen Monofilgarnes ist, durch das Monofilgarn und das weitere Garn die Gewebestruktur mit einer definierten Elastizität gebildet ist, welche eine größere Dehnung der Gewebestruktur als die des darauf gebildeten Filterkuchens ermöglicht,
und die Elastizität des hochelastischen Monofilgarnes und des mindestens einen weiteren Garnes derart unterschiedlich ausgewählt sind, dass beim bestimmungsgemäßen Dehnen zum Abstreifen von angelagerten Feststoffpartikeln an Kreuzungspunkten der Garne eine definierte Relativbewegung zwischen den Garnen unterschiedlicher Elastizität erfolgt, und
das Monofilgarn mit einer Antihaft-Beschichtung versehen ist.

2. Filterbeutel nach Anspruch 1,
**dadurch gekennzeichnet,**
**dass** das Verhältnis der Elastizität des hochelastischen Monofilgarnes zu der Elastizität des mindestens einen weiteren Garnes zumindest 2 zu 1 oder größer beträgt.

3. Filterbeutel nach einem der Ansprüche 1 oder 2,
**dadurch gekennzeichnet,**
**dass** die Gewebestruktur eine richtungsabhängige Elastizität aufweist.

4. Filterbeutel nach einem der Ansprüche 1 bis 3,
**dadurch gekennzeichnet,**
**dass** das hochelastische Monofilgarn aus Polyester, Polyurethane, Polyolefine, Polyamide und/oder deren Copolymere, insbesondere Copolyether-Ester gefertigt ist.

5. Filterbeutel nach einem der Ansprüche 1 bis 4,
**dadurch gekennzeichnet,**
**dass** das mindestens eine weitere Garn ein elastisches und/oder reguläres nichtelastisches multifiles und/oder quasi multifiles Garn umfasst.

6. Filterbeutel nach einem der Ansprüche 1 bis 5,
**dadurch gekennzeichnet,**
**dass** die Kettfäden der Gewebestruktur aus dem hochelastischen Monofilgarn und die Schussfäden aus einem regulären nichtelastischen Garn bestehen.

7. Filterbeutel nach einem der Ansprüche 1 bis 6,
**dadurch gekennzeichnet,**
**dass** eine Oberfläche des Filterbeutels, insbesondere die Oberfläche einer einem Filterkuchen zugewandten Seite, zur Vergütung der Oberfläche kalandriert und/oder mit einer Beschichtung versehen ist.

8. Filterbeutel nach einem der Ansprüche 1 bis 7,
**dadurch gekennzeichnet,**
**dass** die Gewebestruktur Körper- und/oder Atlasbindugen aufweist.

## Claims

1. Filter bag for disk filters, wherein
the filter bag fabricated in a disc-segment shaped manner comprises a narrow opening, and
is manufactured from a filter cloth for a cake-forming filtration with a filtration area, which has an extensible fabric structure of highly elastic monofilament thread that possesses a specific amount of elasticity, and which comprises at least one further thread,
wherein the further thread has an elasticity that is lower than that of the highly elastic monofilament thread,
by means of the monofilament thread and the further thread the fabric structure is designed with a defined amount of elasticity, which permits a greater extension of the fabric structure than that of the filter cake formed thereon, and the elasticity of the highly elastic monofilament thread and of the at least one further thread is selected to be different in such a manner that a defined relative movement occurs between the threads of different elasticity for wiping off accumulated solid particles on crossing points of threads during the extension as specified, and
the monofilament thread is supplied with a non-stick coating.

2. Filter bag according to claim 1,
**characterized in that**
the ratio of elasticity of the highly elastic monofilament thread to the elasticity of the at least one further thread is at least 2 or 1 or higher.

3. Filter bag according to any one of claims 1 or 2,
**characterized in that**
the fabric structure has a directional elasticity.

4. Filter bag according to any one of claims 1 to 3,
**characterized in that**
the highly elastic monofilament thread is produced of polyester, polyurethane, polyolefins, polyamides and/or their copolymers, in particular copolyetherester.

5. Filter bag according to any one of claims 1 to 4,
**characterized in that**
the at least one further thread comprises an elastic and/or regular non-elastic multifilament and/or quasi-multifilament thread.

6. Filter bag according to any one of claims 1 to 5,
**characterized in that**
the wraps of the fabric structure consist of the highly elastic monofilament thread and the wefts consist of a regular non-elastic thread.

7. Filter bag according to any one of claims 1 to 6,
**characterized in that**
a surface of the filter cloth, in particular the surface of a side facing towards a filter cake, is calendered and/or provided with a coating for the refinement of the surface.

8. Filter bag according to any one of claims 1 to 7,
**characterized in that**
the fabric structure has twill and/or satin weaves.

## Revendications

1. Ballon filtrant pour un filtre rotatif à disques, ce ballon filtrant étant fabriqué sous la forme de segment de disque, comportant une ouverture étroite et étant réalisé en un tissu filtrant pour une filtration par formation de gâteau avec une surface filtrante qui présente une structure de tissu souple en monofilament très élastique, lequel possède une certaine élasticité, et au moins un autre fil, cet autre fil possédant une élasticité inférieure à celle du monofilament très élastique, la structure de tissu étant formée par le monofilament et par l'autre fil avec une élasticité définie permettant une plus grande dilatation de la structure de tissu que celle du gâteau de filtration formé dessus, et les élasticités du monofilament très élastique et de l'autre fil étant choisies différemment de telle sorte que, en présence d'une dilatation déterminée, pour enlever des particules de matières solides déposées aux points de croisement du tissu, un mouvement relatif défini se produit entre les fils d'élasticité différente, et le tissu monofilament étant équipé d'un revêtement antiadhésif.

2. Ballon filtrant selon la revendication 1,
**caractérisé en ce que**
le rapport de l'élasticité du monofilament très élastique à l'élasticité d'au moins un autre fil est au moins de 2 pour 1 ou supérieur.

3. Ballon filtrant selon la revendication 1 ou 2,
**caractérisé en ce que**
**en ce que** la structure de tissu présente une élasticité dépendant de la direction.

4. Ballon filtrant selon une des revendications 1 à 3,
**caractérisé en ce que**
le monofilament très élastique est réalisé en polyester, polyuréthane, polyoléfine, polyamide et/ou leurs copolymères, particulièrement le copolyéther-ester.

5. Ballon filtrant selon une des revendications 1 à 4,
**caractérisé en ce qu'**
au moins un autre fil comprend un fil élastique et/ou multifil régulier non élastique et/ou quasi mulitifil.

6. Ballon filtrant selon une des revendications 1 à 5,
**caractérisé en ce que**
les fils de chaîne de la structure de tissu comprennent le monofilament très élastique et les fils de trame comprennent un fil régulier non élastique.

7. Ballon filtrant selon une des revendications 1 à 6,
**caractérisé en ce qu'**
une surface du ballon filtrant, en particulier la surface d'une face opposée au gâteau de filtration, est calandrée pour affiner la surface et/ou prévue avec un revêtement.

8. Ballon filtrant selon une des revendications 1 à 7,
**caractérisé en ce que**
la structure de tissu présente des liaisons solides et/ou en satin.
